# EUROPÄISCHE PATENTSCHRIFT

(11) **EP 2 334 552 B1**
(45) Veröffentlichungstag und Bekanntmachung des Hinweises auf die Patenterteilung: **02.01.2013**
(21) Anmeldenummer: 09778398.9
(22) Anmeldetag: 08.09.2009
(51) Int. Cl.: B64D 13/00, B64D 13/06, F24F 13/072

(54) **SIDE-FEEDER-LUFTFÜHRUNGSELEMENT FÜR EINE FLUGZEUGKLIMAANLAGE**
SIDE FEEDER AIR GUIDING ELEMENT FOR AN AIRCRAFT AIR-CONDITIONING SYSTEM
ELEMENT DE GUIDAGE D'AIR A ENTREE LATERALE D'AIR POUR UN SYSTEME DE CLIMATISATION D'AVION

(30) Priorität: 06.10.2008 DE 102008050546; 06.10.2008 US 102898 P
(43) Veröffentlichungstag der Anmeldung: 22.06.2011
(73) Patentinhaber: Airbus Operations GmbH, 21129 Hamburg (DE)
(72) Erfinder: EDOM, Andreas, 20359 Hamburg (DE); GORES, Ingo, 21129 Hamburg (DE); RAIBLE, Thorsten, 22529 Hamburg (DE)
(74) Vertreter: Schicker, Silvia
(86) Internationale Anmeldenummer: PCT/EP2009/006509
(87) Internationale Veröffentlichungsnummer: WO 2010/040434

(56) Entgegenhaltungen:
- EP-A1- 1 550 569
- DE-A1-102007 019 538
- DE-A1-102007 019 539
- US-A- 2 969 009

## Beschreibung

Die Erfindung betrifft ein Luftführungselement für eine Flugzeugklimaanlage, das beispielsweise dazu dient, von der Flugzeugklimaanlage bereitgestellte klimatisierte Luft in eine Passagierkabine des Flugzeugs zu leiten. Ferner betrifft die Erfindung eine mit einem derartigen Luftführungselement ausgestattete Flugzeugklimaanlage.

Eine Flugzeugklimaanlage umfasst eine Reihe von Luftführungselementen, denen über eine Lufteinlassöffnung ein Leitungssystem der Flugzeugklimaanlage durchströmende Luft zugeführt wird und die dazu dienen, die von der Flugzeugklimaanlage bereitgestellte klimatisierte Luft in die Passagierkabine des Flugzeugs zu leiten. In modernen Verkehrflugzeugen können die Luftführungselemente beispielsweise im Fußraum der Passagierkabine und/oder im Bereich der oberhalb der Sitzreihen angebrachten Gepäckfächer, das heißt im Dreiecksbereich zwischen den Gepäckfächem, der Flugzeugaußenhaut und der Kabinenverkleidung angeordnet sein. Bei einem bekannten Luftführungselement mit seitlicher Lufteinspeisung, einem sogenannten Side Feeder-Luftführungselement, mündet die Lufteintassöfmung in ein sich in Strömungsrichtung der das Luftführungselement durchströmenden Luft verjüngendes Verteilerrohr, in dem die über die Lufteinlassöffnung zugeführte Luft um 90° in Richtung einer Luftauslassöffnung umgelenkt wird. Zur Steuerung der Verteilung der aus der Luftauslassöffnung des Luftführungselements austretenden Luftströmung wird die Luft auf ihrem Strömungsweg durch das Lufiführungselement üblicherweise durch mindestens eine Gitter- oder Lochblende geleitet. Die Gitter- oder Lochblende(n) bewirkt/bewirken einen Rückstau der das Luftführungselement durchströmenden Luft und somit einen Druckverlust, der eine gleichmäßige Ausströmung der Luft über den gesamten Querschnitt der Luftauslassöffnung des Luftführungselements ermöglichen soll.

Insbesondere bei Side Feeder-Lunführungsetementen mit geringen Einbautiefen, das heißt bei Side Feeder-Luftführungselementen, bei denen der Abstand zwischen der Lufteinlassöffnung und der Luftauslassöffnung gering ist, kann jedoch das Problem auftreten, dass die in diesen Elementen eingesetzte(n) flache(n) Gitter- oder Lochblende(n) den in Richtung der Luftströmung durch die Lufteinlassöffnung gerichteten Impuls der Luftströmung nicht in ausreichendem Maße eliminieren kann/können. Dies kann dazu führen, dass die Luftströmung nicht in einer gewünschten Richtung, das heißt beispielsweise in einem Winkel von 90° relativ zur Strömungsrichtung der Luft durch die Lufteinlassöffnung aus der Luftauslassöffnung austritt, sondern der Luftaustritt in einem Winkel, das heißt geneigt zu der gewünschten Austrittsrichtung erfolgt.

Dokument EP1550569, welches alle Merkmale des Oberbegriffs des Anspruchs 1 aufweist, wird als nächstliegender Stand der Technik angesehen.

Die vorliegende Erfindung ist auf die Aufgabe gerichtet, ein zur Verwendung in einer Flugzeugklimaanlage geeignetes, kompakt ausgebildetes Luftführungselement bereitzustellen, das eine gleichmäßige Ausströmung von Luft über einen Querschnitt einer Luftauslassöffnung in einer gewünschten Richtung ermöglicht.

Zur Lösung dieser Aufgabe weist ein erfindungsgemäßes Luftführungselement für eine Flugzeugklimaanlage ein Verteilerrohr auf, das eine im Bereich einer Stirnfläche des Verteilerrohrs angeordnete Lufteinlassöffnung sowie eine im Bereich einer Mantelfläche des Verteilerrohrs angeordnete Luftableitungsöffnung umfasst. Das Verteilerrohr kann beispielsweise zylindrisch geformt sein und einen runden, ovalen, eckigen oder sonstigen Querschnitt aufweisen. Wesentlich ist lediglich, dass die Luft im Bereich der Stirnfläche des Verteilerrohrs, das heißt in einer Richtung parallel zu einer Längsachse des Verteilerrohr in das Verteilerrohr eingespeist wird, wohingegen die Luftabfuhr aus dem Verteilerrohr durch die im Bereich der Verteilerrohrmantelfläche angeordnete Luftableitungsöffnung, das heißt in einer Richtung senkrecht zur Längsachse des Verteilerrohrs erfolgt. Der Strömungsquerschnitt der Luftableitungsöffnung ist geringer als der Strömungsquerschnitt des Verteilerrohr, so dass das Verteilerrohr als Plenum wirkt, in dem sich die über die Lufteinlassöffnung zugeführte Luft aufstaut und dabei bereits einen großen Teil ihres in Richtung der Luftströmung durch die Lufteinlassöffnung gerichteten Impulses abbaut.

Das erfindungsgemäße Luftführungselement umfasst ferner ein von Luft aus dem Verteilerrohr durchströmbares Strömungslenkungselement, das einen mit der Luftableitungsöffnung des Verteilerrohrs verbundenen ersten Abschnitt sowie einen bezogen auf die Richtung der Luftströmung durch das Luftführungselement stromabwärts des ersten Abschnitts angeordneten zweiten Abschnitt aufweist. Der zweite Abschnitt ist dazu eingerichtet, die Luft beim Durchströmen des zweiten Abschnitts in einem Winkel von etwa 45 bis 135° relativ zur Richtung der Luftströmung durch den ersten Abschnitt umzulenken. Mit anderen Worten, der zweite Abschnitt ist so geformt und relativ zu dem ersten Abschnitt ausgerichtet, dass die das Luftführungselement durchströmende Luft in dem zweiten Abschnitt nochmals umgelenkt wird. Die Form und die Ausrichtung des zweiten Abschnitts des Strömungslenkungselements relativ zu dem ersten Abschnitt des Strömungslenkungselements und damit die Umlenkung der Luft in dem zweiten Abschnitts des Strömungslenkungselements kann in Abhängigkeit des vorhandenen Einbauraums für das Luftführungselement in dem Flugzeug und/oder in Abhängigkeit der gewünschten Eigenschaften und Richtung der Luftströmung beim Austritt aus dem Luftführungselement angepasst werden.

Schließlich umfasst das erfindungsgemäße Luftführungselement einen Diffusor, der bezogen auf die Richtung der Luftströmung durch das Luftführungselement stromabwärts des zweiten Abschnitts des Strömungslenkungselements angeordnet und mit einer Luftauslassöffnung verbunden ist. Der Diffusor weist einen sich in Richtung der Luftströmung durch das Luftführungselement kontinuierlich erweiternden Strömungsquerschnitt auf und dient dazu, die Luftströmung durch das Luftführungselement zu verlangsamen und auf den Querschnitt der Luftauslassöffnung zu verteilen.

Mit Hilfe des erfindungsgemäßen Luftführungselements kann der in Richtung der Luftströmung durch die Lufteinlassöffnung gerichtete Impuls der Luftströmung vor dem Austritt der Luftströmung aus der Luftauslassöffnung des Luftführungselements soweit eliminiert werden, dass die Luft in der gewünschten Richtung aus der Luftauslassöffnung des Luftführungselements austritt. Darüber hinaus ermöglicht das Design des Lukführungselements eine gleichmäßige Ausströmung der Luft über den gesamten Querschnitt der Luftauslassöffnung, so dass eine ordnungsgemäße Funktion des erfindungsgemäßen Luftführungselements auch dann gewährleistet ist, wenn die Luftauslassöffnung in einem geringen Abstand zur Lufteinlassöffnung angeordnet ist. Das erfindungsgemäße Luftführungselement kann daher besonders kompakt und leichtgewichtig aufgebaut sein und ist daher besonders gut für einen Einsatz an Bord eines Flugzeugs geeignet.

Die Luftableitungsöffnung des Verteilerrohrs ist vorzugsweise schlitzförmig ausgebildet. Zur Vereinfachung der Geometrie des erfindungsgemäßen Luftführungselements erstreckt sich die Luftableitungsöffnung des Verteilerrohrs vorzugsweise im Wesentlichen parallel zu einer Längsachse des Verteilerrohrs. Eine optimale Strömungssteuerungswirkung des Verteilerrohrs wird dann erreicht, wenn sich die beispielsweise schlitzförmig ausgebildete Luftableitungsöffnung über mindestens 80% der Länge des Verteilerrohrs erstreckt. Die Länge des Verteilerrohrs und der in dem Verteilerrohr ausgebildeten Luftableitungsöffnung kann an die spezifischen Anwendungsanforderungen angepasst werden. In einer Ausführungsform kann die Länge des Verteilerrohrs beispielsweise dem Abstand zwischen zwei Spanten der Flugzeugstruktur entsprechen. Falls gewünscht oder erforderlich, kann die Länge des Verteilerrohrs jedoch auch größer gewählt werden, so dass auch ein sich über mehrere Spanten erstreckendes Luftführungselement realisiert werden kann. Ferner ist es denkbar, ein einziges Verteilerrohr mit angepasstem Durchmesser vorzusehen, das mehrere voneinander getrennte Luftableitungsöffnungen aufweist. Die in einem derartigen Verteilerrohr ausgebildeten Luftableitungsöffnungen können dann mit entsprechenden Strömungslenkungselementen und Diffusoren verbunden sein.

Vorzugsweise ist der zweite Abschnitt des Strömungslenkungselements dazu eingerichtet, die Luft beim Durchströmen des zweiten Abschnitts in einem Winkel von etwa 55 bis 125°, 65 bis 115°, 75 bis 105° oder 85 bis 95° relativ zur Richtung der Luftströmung durch den ersten Abschnitt umzulenken. In einer besonders bevorzugten Ausführungsform des erfindungsgemäßen Luftführungselements ist der zweite Abschnitt des Strömungslenkungselements jedoch dazu eingerichtet, die Luft beim Durchströmen des zweiten Abschnitts in einem Winkel von etwa 90° relativ zur Richtung der Luftströmung durch den ersten Abschnitt umzulenken. Das erfindungsgemäße Luftführungselement ist dann besonders dazu geeignet in einer Flugzeugklimaanlage dazu eingesetzt zu werden, im Dreiecksbereich zwischen den Gepäckfächern, der Flugzeugaußenhaut und der Kabinenverkleidung angeordnet zu werden und die von der Flugzeugklimaanlage bereitgestellte Luft in einem Winkel von ca. 90° zur Strömungsrichtung der Luft durch das parallel zu einer Längsachse der Flugzeugkabine angeordnete Verteilerrohr in die Flugzeugkabine zu leiten.

Der zweite Abschnitt des Strömungslenkungselements kann gekrümmt ausgebildet sein. Vorzugsweise weist das Strömungslenkungselement entlang seiner Länge einen im Wesentlichen konstanten Strömungsquerschnitt auf, der an einen Strömungsquerschnitt der Luftableitungsöffnung des Verteilerrohrs angepasst ist.

Beispielsweise kann das Strömungslenkungselement durch zwei miteinander verbindbare Schalen gebildet werden, die einen von Luft durchströmbaren Innenraum des Strömungslenkungselement begrenzen. Diese Schalen können beispielsweise zumindest abschnittsweise aus einem glasfaserverstärkten Kunststoffmaterial bestehen. In ähnlicher Weise kann auch der Diffusor durch zwei miteinander verbindbare Schalen gebildet werden, die einen von Luft durchströmbaren Innenraum des Diffusors begrenzen. Wiederum können diese Schalen zumindest abschnittsweise aus einem glasfaserverstärkten Kunststoffmaterial bestehen. Vorzugsweise sind die den Diffusor bildenden Schalen einstückig mit den das Strömungslenkungselement bildenden Schalen ausgeführt.

In dem Strömungslenkungselement kann eine Mehrzahl von Stegen angeordnet sein, die sich parallel zur Strömungsrichtung der Luft durch das Strömungslenkungselement erstrecken. Vorzugsweise hat ein dem Verteilerrohr zugewandtes Ende der Stege einen Abstand von der Luftableitungsöffnung des Verteilerrohrs, der dem Abstand der das Strömungslenkungselement bildenden Schalen voneinander, das heißt der Breite des durchströmten Spalts des Strömungslenkungselements entspricht. Von diesem Ende erstrecken sich die Stege vorzugsweise durch das gesamte Strömungslenkungselement bis zu einem Eintritt in den Diffusor. Durch die Stege wird der Strömungspfad durch das Strömungslenkungselement in eine Vielzahl von Führungskanälen unterteilt, wobei der Abstand zwischen zwei zueinander benachbarten Stege vorzugsweise etwa doppelt so groß ist wie der Abstand der das Strömungslenkungselement bildenden Schalen voneinander, das heißt die Breite des durchströmten Spalts des Strömungslenkungselements. Die durch die Stege gebildeten Führungskanäle zwingen die das Strömungslenkungselement durchströmende Luft in eine in einem Winkel von 90° relativ zur Richtung der Luftströmung durch die Lufteinlassöffnung ausgerichtete Strömungsrichtung. Dadurch wird der beim Eintritt in die Lufiableitungsöffnung des Verteilerrohrs noch vorhandene Impuls der Luft in Richtung der Luftströmung durch die Lufteinlassöffnung deutlich verringert. Die in dem Strömungslenkungselement ausgebildeten Führungskanäle sorgen somit für eine effektive Umlenkung der Luftströmung in die gewünschte "neue" Strömungsrichtung.

Der Diffusor weist vorzugsweise einen sich in Richtung der Luftströmung durch das Luftführungselement kontinuierlich erweiternden Strömungsquerschnitt auf. Der Öffnungswinkel des Diffusors ist dabei so gewählt, dass Strömungsablösungen und Turbulenzen vermieden werden. Beispielsweise kann der Diffusor so gestaltet sein, dass er zwei bezüglich seiner Längsachse jeweils um den gleichen Winkel radial nach außen geneigte Seitenwände aufweist. Die Längsachse des Diffusors erstreckt sich in Richtung der Luftströmung beim Austritt aus dem zweiten Abschnitt des Strömungslenkungselements: Der Neigungswinkel der Seitenwände des Diffusors kann beispielsweise 7° betragen.

In einem Luftführungselement, bei dem in dem Strömungslenkungselement eine Umlenkung der Luftströmung um beispielsweise etwa 90° erfolgt, hat die das Strömungslenkungselement durchströmende Luft einen Impuls in Richtung der Luftströmung durch den ersten Abschnitt des Strömungslenkungselements. Mit anderen Worten, in einem Luftumlenkungsbereich des Strömungslenkungselements kommt es daher zu einer Aufstauung der Luft. Um diesem Impuls der Luft in Richtung der Luftströmung durch den ersten Abschnitt des Strömungslenkungselements Rechnung zu tragen, weist der Diffusor des erfindungsgemäßen Luftführungselements vorzugsweise eine im Wesentlichen parallel zu der Längsachse des Diffusors angeordnete erste Seitenwand sowie eine in einem Winkel zu der Längsachse des Diffusors in Richtung der Strömung der Luft durch den ersten Abschnitt des Strömungslenkungselements geneigte zweite Seitenwand auf. Die erste Seitenwand kann beispielsweise eine dem Verteilungsrohr des Luftführungselements zugewandte Seitenwand des Diffusors sein. Die zweite Seitenwand kann beispielsweise eine von dem Verteilerrohr des Luftführungselements abgewandte Seitenwand des Diffusors sein. Der Neigungswinkel der zweiten Seitenwand ist vorzugsweise wiederum so gewählt, dass Strömungsablösungen und Turbulenzen vermieden werden. Beispielsweise kann die zweite Seitenwand in einem Winkel von ca. 14° zur Längsachse des Diffusors geneigt sein.

Bei bisher bekannten Luftführungselementen besteht ferner das Problem, dass lediglich Lärm, der in mit den Luftführungselementen verbundenen Zuluftrohren entsteht, durch Schalldämpferschläuche eliminiert wird. Lärm, der innerhalb der Luftführungselemente beispielsweise durch Umlenkung des Luftstroms auf engem Raum oder durch Strömungsablösungen beispielsweise aufgrund von plötzlichen Strömungsquerschnittsänderungen entsteht, tritt dagegen ungedämpft in die Flugzeugkabine ein. Um diesem Problem zu begegnen und den in dem Luftführungselement auftretenden Lärm zu dämpfen, besteht daher mindestens eine Seitenwand des Strömungslenkungselements des erfindungsgemäßen Luftführungselements zumindest abschnittsweise aus einem schallabsorbierenden Schaummaterial. Alternativ oder zusätzlich dazu besteht ferner mindestens eine Seitenwand des Diffusors zumindest abschnittsweise aus einem schallabsorbierenden Schaummaterial. In dem erfindungsgemäßen Lufiführungselement können somit Strömungskanäle, die im Vergleich zu ihrer Höhe eine große Länge aufweisen mit einem schallabsorbierenden Schaummaterial versehen sein, wodurch eine effektive Schalldämpfung ermöglicht wird. Als schallabsorbierendes Schaummaterial kann beispielsweise ein Polyimid-Schaum oder ein Melamin-Schaum, wie beispielsweise ein Basotec^{®}-Schaum verwendet werden.

In dem erfindungsgemäßen Luftführungselement weist das Strömungslenkungselement in einem Luftumlenkungsbereich vorzugsweise einen Innenradius sowie einen Außenradius auf. In dem Strömungslenkungselement wird Schall von einer den Innenradius des Strömungslerikungselements bildenden Seitenwand auf eine den Außenradius bildenden Seitenwand reflektiert. Die Aufbringung eines schallabsorbierenden Materials auf die den Innenradius bildende Seitenwand des Strömungslenkungselements ist daher verhältnismäßig unwirksam. Bei dem erfindungsgemäßen Luftführungselement ist daher vorzugsweise lediglich die einen Außenradius des Strömungslenkungselements bildende Seitenwand des Strömungslenkungselements zumindest abschnittsweise aus einem schallabsorbierenden Schaummaterial geformt. Die einen Innenradius des Strömungslenkungselements bildende Seitenwand des Strömungslenkungselements kann dagegen beispielsweise vollständig aus einem glasfaserverstärkten Kunststoffmaterial bestehen.

Im Bereich des Diffusors bestehen dagegen vorzugsweise sowohl die dem Verteilerrohr zugewandte erste Seitenwand des Diffusors als auch die von dem Verteilerrohr abgewande Seitenwand des Diffusors zumindest abschnittsweise aus einem schallabsorbierenden Schaummaterial. Um der Tatsache Rechnung zu tragen, dass im Bereich des Strömungslenkungselements der Schall von der einen Innenradius des Strömungslenkungselements bildenden Seitenwand auf die einen Außenradius des Strömungslenkungselements bildende Seitenwand reflektiert wird, weist das schallabsorbierende Schaummaterial im Bereich der einen Außenradius des Strömungslenkungselements bildenden Seitenwand vorzugsweise eine höhere Dicke auf als erforderlich wäre, wenn keine Reflexionseffekte auftreten würden. Beispielsweise kann die Dicke des Schaummaterials im Bereich der einen Außenradius des Strömungslenkungselements bildenden Seitenwand ca. 25mm betragen. Im Bereich des Diffusors treten dagegen keine Reflexionseffekte auf, so dass das im Bereich der Seitenwände des Diffusors angeordnete schallabsorbierende Schallmaterial jeweils eine geringere Dicke aufweisen kann als das im Bereich der einen Außenradius des Strömungslenkungselements bildenden Seitenwand des Strömungslenkungselements. Beispielsweise kann im Bereich des Diffusors eine Dicke des schallabsorbierenden Schaummaterials von ca. 15mm ausreichend sein.

Eine ordnungsgemäße schalldämpfende Wirkung der in den Seitenwänden des Strömungslenkungselements und des Diffusors vorgesehenen Schaummaterialabschnitte ist nur dann gewährleistet, wenn ein ausreichender Kontakt zwischen einer dem Innenraum des Strömungslenkungselements und des Diffusors zugewandten Oberfläche der Schaummaterialabschnitte und der das Luftführungselement durchströmenden Luft vorhanden ist. Die Schaummaterialabschnitte sind daher vorzugsweise derart in die das Strömungslenkungselement und den Diffusor bildenden Schalen eingearbeitet, dass ein unmittelbarer Kontakt zwischen der dem Innenraum des Strömungslenkungselements und des Diffusors zugewandten Oberfläche der Schaummaterialabschnitte und der das Luftführungselement durchströmenden Luft möglich ist.

Zur Stabilisierung der Schaummaterialoberfläche, das heißt um schädigende Einwirkungen auf die Schaummaterialoberfläche beispielsweise durch die durch das Luftführungselement geleitete Luftströmung zu vermeiden, ist eine dem Innenraum des Strömungslenkungselements zugewandte Oberfläche eines aus einem schallabsorbierenden Schaummaterial bestehenden Seitenwandabschnitts des Strömungslenkungselements vorzugsweise mit einer perforierten Abdeckung versehen. In ähnlicher Weise ist eine dem Innenraum des Diffusors zugewandte Oberfläche eines aus einem schallabsorbierenden Schaummaterial bestehenden Seitenwandabschnitts des Diffusors vorzugsweise ebenfalls mit einer perforierten Abdeckung versehen. Die Abdeckung kann beispielsweise in Form eines auf die Schaummaterialoberfläche aufgebrachten Laminats ausgebildet sein, das jedoch ausreichend perforiert sein muss, um einen ordnungsgemäßen Kontakt zwischen der das Luftführungselement durchströmenden Luft und der/den Schaummaterialoberfläche(n) zu gewährleisten.

Stromabwärts des Diffusors umfasst das erfindungsgemäße Luftführungselement vorzugsweise einen Luftauslasskanal, dessen Strömungsquerschnitt dem Austrittsquerschnitt des Diffusors entspricht. Mit anderen Worten, der Luftauslasskanal des Luftführungselements bildet eine Verlängerung des Diffusors mit konstantem Strömungsquerschnitt. In dem Luftführungskanal, das heißt im Bereich eines dem Diffusor zugewandten Endes des Luftauslasskanals ist vorzugsweise eine Lochblende angeordnet. Der Luftauslasskanal wird vorzugsweise durch zwei miteinander verbindbare Schalen gebildet, die einen von Luft durchströmbaren Innenraum des Luftauslasskanals begrenzen, wobei die den Luftauslasskanal bildenden Schalen vorzugsweise jeweils einstückig mit den das Strömungslenkungselement und den Diffusor bildenden Schalen ausgeführt sind. Die Lochblende kann dann in einfacher und komfortabler Weise zwischen die den Luftauslasskanal bildenden Schalen eingeklebt werden.

Während der Diffusor für eine Verteilung der das Luftführungselement durchströmenden Luft auf den Austrittsquerschnitt sorgt, findet vor der in dem Luftauslasskanal angeordneten Lochblende eine nochmalige Aufstauung der Luft statt. Der pneumatische Gesamtwiderstand des erfindungsgemäßen Luftführungselements ergibt sich folglich einerseits aus dem Druckaufbau im Verteilerrohr und andererseits aus dem Druckaufbau vor der Lochblende. Während der Druck im Verteilerrohr durch die Strömungsquerschnittsverengung zwischen dem Verteilerrohr und dem Strömungslenkungselement sowie der Länge des Strömungspfads durch das Strömungslenkungselement bestimmt wird, wird der Druckaufbau vor der Lochblende durch das Design der Lochblende bestimmt. Insbesondere kann die Steuerung des Druckaufbaus vor der Lochblende durch eine entsprechende Anpassung der Anzahl und des Durchmessers der in der Lochblende vorgesehenen Löcher erfolgen. Vorzugsweise ist die Lochblende so gestaltet, dass der Druckabfall über die Lochblende bei nominalem Luftdurchsatz 50 Pa beträgt. Beispielsweise kann die Lochblende mit in zwei Reihen angeordneten Löchern versehen sein, wobei ein Abstand zwischen zwei zueinander benachbarten Löcher einer Reihe vorzugsweise gleich dem Abstand der Lochreihen voneinander ist.

Die Lochblende des erfindungsgemäßen Luftführungselements umfasst vorzugsweise eine Grundplatte, deren Abmessungen dem Strömungsquerschnitt des Luftauslasskanals entsprechen. Im Bereich einer dem Diffusor zugewandten Oberfläche der Grundplatte sind die in der Grundplatte der Lochblende ausgebildeten Löcher an ihren Rändern vorzugsweise mit einem Einlaufradius versehen. Mit anderen Worten, die in der Grundplatte der Lochblende ausgebildeten Löcher weisen im Bereich der dem Diffusor zugewandten Oberfläche der Grundplatte keine scharfen Kanten, sondern eine "weiche" Form auf. Dadurch werden Turbulenzen, die sich beim Durchtritt der Luft durch den verengten Strömungsquerschnitt der Löcher bilden, minimiert.

Von einer von dem Diffusor abgewandten Oberfläche des Lochblendengrundplatte, das heißt von einer der Luftauslassöffnung des Luftführungselements zugewandten Oberfläche der Lochblendengrundplatte erstreckt sich vorzugsweise eine Mehrzahl von Luftführungshülsen. Diese Luftführungshülsen vermindern Turbulenzen in der die Luftführungshülsen durchströmenden Luftströmung und sorgen für eine Führung der Luftströmung senkrecht zur Grundplatte der Lochblende. Die Länge der Luftführungshülsen entspricht vorzugsweise ihrem Innendurchmesser. Beispielsweise können die Luftführungshülsen eine Länge von ca. 5mm haben. Die Luftführungshülsen ermöglichen die gewünschte Führung der Luftströmung, ohne dass es hierzu erforderlich wäre, die Lochblende dicker und damit schwergewichtiger auszubilden.

In dem Luftauslasskanal des erfindungsgemäßen Luftführungselements kann ferner eine Mehrzahl von Leitblechen im Wesentlichen parallel zueinander angeordnet sein, die den Luftauslasskanal in mehrere Teilkanäle unterteilen. Die Leitbleche können aus jedem geeigneten Material, beispielsweise aus Metall oder einem Kunststoffmaterial bestehen. Durch die Leitbleche wird die Luftströmung vor ihrem Austritt aus der Luftauslassöffnung des Luftführungselements nochmals geführt. Die Leitbleche können in einem Abstand von der Luftauslassöffnung des Luftführungselements zugewandten Enden der Luftführungshülsen angeordnet sein, der dem Innendurchmesser der Luftführungshülsen entspricht. Vorzugsweise erstrecken sich die Leitbleche bis zur Luftauslassöffnung, das heißt die Leitbleche schließen vorzugsweise mit einem in die Luftauslassöffnung mündenden Rand des Luftauslasskanal ab. Die Leitbleche können in einfacher und komfortabler Art und Weise zwischen die den Luftauslasskanal bildenden Schalen geklebt werden.

Eine erfindungsgemäße Flugzeugklimaanlage umfasst mindestens ein oben beschriebenes Luftführungselement.

Ein bevorzugtes Ausführungsbeispiel der Erfindung wird nun anhand der beigefügten schematischen Zeichnungen näher erläutet, von denen
- Figur 1: eine dreidimensionale Explosionsansicht eines Luftführungselement für eine Flugzeugklimaanlage zeigt und
- Figur 2: eine Querschnittsansicht des Luftführungselements gemäß Figur 1 zeigt.

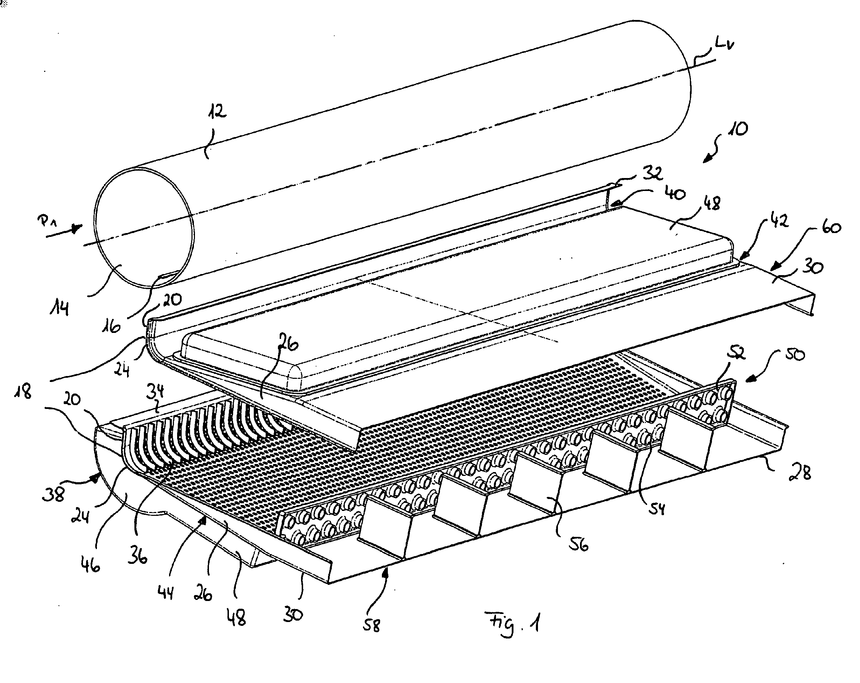

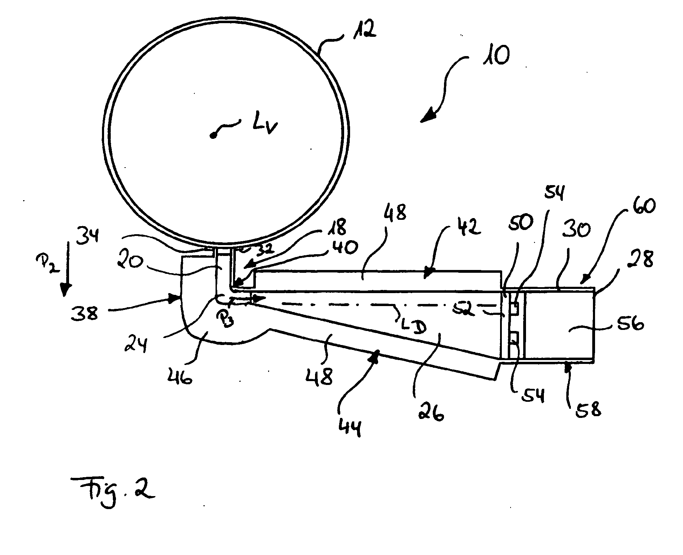

In den Figuren 1 und 2 ist ein Luftführungselement 10 gezeigt, das zur Verwendung in einer Flugzeugklimaanlage vorgesehen ist. Das Luftführungselement 10 umfasst ein Verteilerrohr 12, das in dem in den Figuren 1 und 2 gezeigten Ausführungsbeispiel einen runden Querschnitt aufweist. Im Bereich einer ersten Stirnfläche ist das Verteilerrohr 12 mit einer Lufteinlassöffnung 14 versehen. Im Bereich einer der ersten Stirnfläche gegenüberliegenden zweiten Stirnfläche ist das Verteilerrohr 12 dagegen geschlossen. In einer Mantelfläche des Verteilerrohrs 12 ist eine schlitzförmige Luftableitungsöffnung 16 ausgebildet, die sich parallel zu einer Längsachse L_{V} des Verteilerrohrs 12 über nahezu die gesamte Länge des Verteilerrohrs 12 erstreckt.

Das Luftführungselement 10 umfasst ferner ein mit dem Verteilerrohr 12 verbundenes Strömungslenkungselement 18. Das Strömungslenkungselement 18 weist einen mit der Luftableitungsöffnung 16 des Verteilerrohrs 12 verbundenen ersten Abschnitt 20 auf. Der erste Abschnitt 20 des Strömungslenkungselements 18 ist mit einem gekrümmt ausgebildeten zweiten Abschnitt 24 des Strömungslenkungselements 18 verbunden. Der Strömungsquerschnitt des Strömungslenkungselements 18, das heißt der Querschnitt eines von Luft durchströmbaren Innenraums des Strömungslenkungselements 18 entspricht dem Strömungsquerschnitt der Luftableitungsöffnung 16 des Verteilerrohrs 12. Das Strömungslenkungselement 18 ist folglich spaltbogenförmig ausgebildet, das heißt der erste Abschnitt 20 des Strömungslenkungselements 18 erstreckt sich an einem Winkel von ca. 90° zur Mantelfläche des Verteilerrohrs, während der zweite Abschnitt 24 des Strömungslenkungselements, so geformt ist, dass er die Luftströmung in einem Winkel von etwa 90° zur Richtung der Luftströmung durch den ersten Abschnitt 20 des Strömungslenkungselements 18 umlenkt.

An den zweiten Abschnitt 24 des Strömungslenkungselements 18 grenzt ein Diffusor 26 an, dessen Strömungsquerschnitt sich in Richtung einer Luftauslassöffnung 28 des Luftführungselements 10 kontinuierlich erweitert. Zwischen dem Diffusor 26 und der Luftauslassöffnung 28 erstreckt sich jedoch noch ein Luftauslasskanal 30, der einen konstanten und dem Strömungsquerschnitt der Luftauslassöffnung 28 entsprechenden Strömungsquerschnitt aufweist.

Das Strömungslenkungselement 18, der Diffusor 28 und der Luftauslasskanal 30 werden durch zwei miteinander verbindbare Schalen gebildet, die den von Luft durchströmbaren Innenraum des Strömungslenkungselements 18 sowie von Luft durchströmbare Innenräume des Diffusors 26 und des Luftauslasskanals 30 begrenzen (siehe Figur 1). Die das Strömungslenkungselement 18, den Diffusor 26 und den Luftauslasskanal 30 bildenden Schalen bestehen zumindest abschnittsweise aus einem glasfaserverstärkten Kunststoffmaterial. Das Verteilerrohr 12 kann ebenfalls aus einem glasfaserverstärkten Kunststoffmaterial oder einem anderen geeigneten Material bestehen. Zur Verbindung des Strömungslenkungselements 18, des Diffusors 26 und des Luftauslasskanals 30 mit dem Verteilerrohr 12 sind an einem dem Verteilerrohr 12 zugewandten Ende des Strömungslenkungselements 18 an den das Strömungslenkungselement 18, den Diffusor 26 und den Luftauslasskanal 30 bildenden Schalen jeweils Flanschabschnitte 32, 34 vorgesehen, mittels derer das Verteilerrohr 12 mit dem Strömungslenkungselement 18, dem Diffusor 26 und dem Luftauslasskanal 30 verklebt oder anderweitig verbunden werden kann.

In dem Strömungslenkungselement 18 ist eine Mehrzahl von Stegen 36 angeordnet, die sich zwischen einer einen Außenradius des Strömungslenkungselements 18 bildenden Seitenwand 38 des Strömungslenkungselements 18 und einer einen Innenradius des Strömungslenkungselements 18 bildenden Seitenwand 40 des Strömungslenkungselements 18 erstrecken. Die Stege 36 sind integriert mit der einen Außenradius des Strömungslenkungselements 18 bildenden Seitenwand 38 ausgebildet. Alternativ dazu können die Stege 36 jedoch auch integriert mit der einen Innenradius des Strömungslenkungselements 18 bildenden Seitenwand 40 ausgebildet sein. Dem Verteilerrohr 12 zugewandte Enden der Stege 36 sind in einem Abstand von der Luftableitungsöffnung 16 des Verteilerrohrs 12 angeordnet, der in etwa dem Abstand der Seitewände 38, 40 des Strömungslenkungselements 18 voneinander entspricht. Von dem Verteilerrohr 12 abgewandte Enden der Stege 36 erstrecken sich dagegen bis zu einem dem Diffusor 26 zugewandten Ende des Strömungslenkungselements 18. Durch die Stege 36 wird das Strömungslenkungselement 18 in eine Vielzahl von Führungskanäle unterteilt, wobei ihre Breite, das heißt der Abstand zwischen zwei zueinander benachbarten Stege etwa doppelt so groß ist wie ihre Höhe, das heißt der Abstand zwischen der einen Außenradius des Strömungslenkungselements 18 bildenden Seitenwand 38 und der einen Innenradius des Strömungslenkungselements 18 bildenden Seitenwand 40 des Strömungslenkungselements 18.

Wie am besten in Figur 2 zu erkennen ist, umfasst der Diffusor 26 eine dem Verteilerrohr 12 zugewandte erste Seitenwand 42, die sich im Wesentlichen parallel zu einer Längsachse L_{D} des Diffusors 26 erstreckt. Eine von dem Verteilerrohr 12 abgewandte zweite Seitenwand 44 des Diffusors 26 ist dagegen zur Realisierung des sich kontinuierlich erweiternden Strömungsquerschnitts des Diffusors 26 in einem Winkel von ca. 14° zur Längsachse L_{D} in einer von dem Verteilerrohr 12 abgewandten Richtung, das heißt in Figur 2 nach unten geneigt. Die Längsachse L_{D} des Diffusors 26 erstreckt in der Verlängerung der Strömungsrichtung der Luft beim Austritt aus dem zweiten Abschnitt 24 des Strömungslenkungselements 18.

Die einen Außenradius des Strömungslenkungselements 18 bildende Seitenwand 38 des Strömungslenkungselements 18 besteht abschnittsweise aus einem schallabsorbierenden Schaummaterial 46. In ähnlicher Weise bestehen die erste und die zweite Seitenwand 42, 44 des Diffusors 26 ebenso aus einem schallabsorbierenden Schaummaterial 48. Als schallabsorbierendes Schaummaterial 46, 48 kann beispielsweise ein Polyimid-Schaum oder ein Melamin-Schaum, wie z.B. ein Basotec^{®}-Schaum zum Einsatz kommen. Das schallabsorbierende Schaummaterial 46, 48 ist derart in die das Strömungslenkungselement 18 und den Diffusor 26 bildenden Schalen aus einem glasfaserverstärkten Kunststoffmaterial integriert, dass im Bereich der Schaummaterialabschnitte dem Innenraum des Strömungslenkungselements 18 und des Diffusors 26 zugewandte Oberflächen des Strömungslenkungselements 18 und des Diffusors 26 durch das Schaummaterial 46, 48 gebildet werden. Mit anderen Worten, das Schaummaterial 46, 48 ist nicht auf die aus einem glasfaserverstärkten Kunststoffmaterial bestehenden Schalen aufgebracht, sondern bildet einen integrierten Bestandteil der dem Innenraum des Strömungslenkungselements 18 und des Diffusors 26 zugewandten Oberflächen dieser beiden Komponenten. Zur Stabilisierung der dem Innenraum des Strömungslenkungselements 18 und des Diffusors 26 zugewandten Schaummaterialoberflächen ist auf diese Oberflächen eine in Form eines perforierten Laminats ausgebildete Abdeckung aufgebracht.

An einem dem Diffusor 26 zugewandten Ende des Luftauslasskanals 30 ist in dem Luftauslasskanal 30 eine Lochblende 50 angeordnet. Die Lochblende 50 umfasst eine Grundplatte 52, deren Abmessungen dem Strömungsquerschnitt des Luftauslasskanals 30 entsprechen. Auf einer dem Diffusor 26 zugewandten Oberfläche der Lochblendengrundplatte 52 sind in der Lochblendengrundplatte 52 ausgebildete Löcher an ihren Rändern mit einem Einlaufradius versehen. Mit anderen Worten, die in der Lochblendengrundplatte 52 ausgebildeten Löcher haben keine scharfkantigen Ränder, sondern "weiche" Radien. Von einer von dem Diffusor 26 abgewandten Oberfläche der Lochblendengrundplatte 52 erstrecken sich Luftführungshülsen 54, deren Länge ihrem Innendurchmesser entspricht. Die in der Lochblendengrundplatte 52 ausgebildeten Löcher bzw. die Luftführungshülsen 54 sind in zwei zueinander parallelen Reihen angeordnet, wobei der Abstand der Reihen gleich dem Abstand zweier benachbarter Löcher bzw. Luftführungshülsen 54 in einer Reihe ist.

In dem Luftauslasskanal 30 ist ferner eine Mehrzahl von Leitblechen 56 angeordnet, die sich in Richtung der Luftauslassöffnung 28 von einer ersten Seitenwand 58 des Luftauslasskanals 30 bis zu einer zweiten Seitenwand 60 des Luftauslasskanals 30 erstrecken. Die Leitbleche 56 unterteilen den Luftauslasskanal 30 in mehrere Teilkanäle. Ihr dem Diffusor 26 zugewandtes Ende ist in einem Abstand von den Luftführungshülsen 54 der Lochblende 50 angeordnet, der dem Innendurchmesser der Luftführungshülsen 54 entspricht. An ihrem von dem Diffusor 26 abgewandten Ende erstrecken sich die Leitbleche 56 bis zur Luftauslassöffnung 28, das heißt die Leitbleche 56 schließen mit einem in die Luftauslassöffnung 28 mündenden Rand des Luftauslasskanals 30 ab.

Im Folgenden wird die Funktion des Luftführungselements 10 näher erläutert. Im Betrieb des Luftführungselements 10 tritt von einer Flugzeugklimaanlage bereitgestellte Luft durch die Lufteinlassöffnung 14 des Verteilerrohrs 12 in das Luftführungselement 10 ein. Die Strömungsrichtung der Luft ist dabei parallel zur Längsachse L_{V} des Verteilerrohrs 12 und in der Figur 1 durch den Pfeil P₁ symbolisiert. Die in das Verteilerrohr 12 zugeführte Luft wird über die Luftableitungsöffnung 16 aus dem Verteilerrohr 12 in das Strömungslenkungselement 18 geleitet. Durch diese Strömungsquerschnittsverengung baut sich in dem Verteilerrohr 12 ein Druck auf, der einerseits durch die Strömungsquerschnittsverengung im Bereich der Luftableitungsöffnung 16 und andererseits durch die Länge des Strömungspfads durch das Strömungslenkungselement 18 bestimmt wird.

Beim Austritt aus dem Verteilerrohr 12 durch die Luftableitungsöffnung 16 wird die über die Lufteinlassöffnung 14 zugeführte Luft relativ zur Strömungsrichtung im Bereich der Lufteinlassöffnung 14 um 90° umgelenkt. Mit anderen Worten, die Luft durchströmt den ersten Abschnitt 20 des Strömungslenkungselements 18 in einem Winkel von 90° zur Richtung der Strömung durch die Lufteinlassöffnung 14. Dies ist in Figur 2 durch den Pfeil P₂ veranschaulicht. In dem Strömungslenkungselement 18 erfolgt eine erneute Umlenkung der Strömung, das heißt die Luft wird in dem zweiten Abschnitt 24 des Strömungslenkungselements 18 nochmals um einen Winkel von etwa 90° zur Strömungsrichtung durch den ersten Abschnitt 20 des Strömungslenkungselements 18 umgelenkt. Die Richtung der Strömung beim Austritt aus dem zweiten Abschnitt 24 des Strömungslenkungselements 18 ist in Figur 2 durch den Pfeil P₃ veranschaulicht.

Beim Eintritt in das Strömungslenkungselement 18 hat die Luft noch einen Impuls in Richtung der Luftströmung durch die Lufteinlassöffnung 14, das heißt in Richtung des Pfeils P₁. Dieser Impuls wird jedoch durch die in dem Strömungslenkungselement 18 ausgebildeten Stege 36 minimiert. Mit anderen Worten, die Stege 36 sorgen dafür, dass die Luftströmung beim Durchströmen der durch die Stege 36 gebildeten Führungskanäle in die gewünschte Richtung gelenkt wird.

Im Diffusor 26 verlangsamt sich die Strömung und die Strömung wird kontinuierlich auf den Strömungsquerschnitt der Luftauslassöffnung 28 verteilt. Beim Eintritt der Luft in den Diffusor 26 hat die Luftströmung jedoch aufgrund der Umlenkung im Strömungslenkungselement 18 noch einen Impuls in Richtung des Pfeils P₂. Diesem Phänomen wird dadurch Rechnung getragen, dass der Diffusor 26 nicht symmetrisch ausgebildet ist, sondern lediglich die zweite Seitenwand 44 des Diffusors 26 relativ zur Längsachse L_{D} des Diffusors 26 in Richtung der Luftströmung der Luft durch den ersten Abschnitt 20 des Strömungslenkungselements 18, das heißt in Richtung des Pfeils P₂ geneigt ist. Durch diese Ausgestaltung des Diffusors 26 wird eine ordnungsgemäße Funktion des Diffusors 26 sichergestellt.

Vor der Lochblende 50 wird die das Luftführungselement 10 durchströmende Luft schließlich aufgrund der Strömungsquerschnittsverengung durch die Lochblende 50 erneut gestaut. Der Druckabfall über die Lochblende 50 beträgt bei nominalem Luftdurchsatz ca. 50 Pa. Da die in der Lochblendengrundplatte 52 ausgebildeten Löcher keine scharfen Kanten aufweisen, sondern mit einem "weichen" Einlaufradius versehen sind, wird die Ausbildung von Turbulenzen beim Einströmen der Luft in diese Löcher minimiert. Die Luftführungshülsen 54 sorgen schließlich für eine Führung der Strömung und die Minimierung eventuell vorhandener Turbulenzen. Die endgültige Strömungssteuerung erfolgt schließlich mit Hilfe der Leitbleche 56, die vor dem Austritt der Luft aus der Luftauslassöffnung 28 für eine nochmalige Führung der Strömung sorgen.

Durch die mehrmaligen Veränderungen des Strömungsquerschnitts entlang des Strömungspfads durch das Luftführungselement 10 sowie durch die Umlenkung der Luftströmung beim Durchströmen des Luftführungselements 10 entstehender Lärm wird mit Hilfe des schallabsorbierenden Schaummaterials 46, 48 gedämpft. Im Bereich des Strömungslenkungselements 18 wird der Schall an der einen Innenradius des Strömungslenkungselements 18 bildenden Seitenwand 40 des Strömungslenkungselements 18 reflektiert. Die zumindest abschnittsweise Ausbildung der Seitenwand 40 des Strömungslenkungselements 18 mit einem schallabsorbierenden Schaummaterial wäre daher zur Schalldämpfung nicht wirksam. Es ist daher ausreichend, lediglich die einen Außenradius des Strömungslenkungselements 18 bildende Seitenwand 38 des Strömungslenkungselements 18 abschnittsweise aus einem schallabsorbierenden Schaummaterial 46 auszubilden. Bei der Auslegung der Dicke des Schaummaterials 46 muss jedoch die Schallreflexion an der einen Innenradius des Strömungslenkungselements 18 bildenden Seitenwand 40 des Strömungslenkungselements 18 berücksichtigt werden, das heißt das Schaummaterial 46 muss eine größere Dicke aufweisen als ohne Reflexionseffekte erforderlich wäre. Beispielsweise kann die Dicke des im Bereich der einen Außenradius des Strömungslenkungselements 18 bildenden Seitenwand 38 des Strömungslenkungselements 18 vorgesehenen Schaummaterials 46 25mm betragen.

Im Bereich des Diffusors 26 treten dagegen keine Reflexionseffekte auf, so dass es sinnvoll ist, beide Seitenwände 42, 44 des Diffusors 26 zumindest abschnittsweise aus einem schallabsorbierenden Schaummaterial 48 auszubilden. Die Dicke des Schaummaterials 48 kann dabei geringer sein als die Dicke des im Bereich des Strömungslenkungselements 18 eingesetzten Schaummaterials 46. Beispielsweise kann im Bereich des Diffusors 26 eine Schaummaterialdicke von 15mm ausreichend sein.

In einer Flugzeugklimaanlage kann das Luftführungselement 10 als einzelnes Element eingesetzt werden. Beispielsweise kann das Luftführungselement 10 so dimensioniert sein, dass es den Abstand zwischen zwei Spanten der Flugzeugstruktur überbrückt. Alternativ dazu ist es jedoch auch denkbar, das Verteilerrohr 12, das Strömungslenkungselement 18, den Diffusor 26, den Luftauslasskanal 30 sowie die weiteren Komponenten des Luftführungselements 10 so zu dimensionieren, dass sich das Luftführungselement 10 über mehrere Spantbreiten erstreckt. Als weitere Alternative kann das Verteilerrohr 12 eine sich beispielsweise über mehrere Spantbreiten erstreckende Länge und einen angepassten Durchmesser aufweisen und mit mehreren separat voneinander ausgebildeten Luftableitungsöffnungen 16 versehen sein. Diese Luftabteitungsöffnungen 16 können dann mit einem Strömungsumlenkungselement 18, einem Diffusor 26 und einem Luftauslasskanal 30 verbunden sein, die sich jeweils über beispielsweise eine Spantbreite erstrecken.

## Patentansprüche

1. Luftführungselement (10) für eine Flugzeugklimaanlage, mit:
- einem Verteilerrohr (12), das eine im Bereich einer Stirnfläche des Verteilerrohrs (12) angeordnete Lufteinlassöffnung (14) sowie eine im Bereich einer Mantelfläche des Verteilerrohrs (12) angeordnete Luftableitungsöffnung (16) aufweist,
- einem Strömungslenkungselement (18), das einen mit der Luftabieitungsöfmung (16) des Verteilerrohrs (12) verbundenen ersten Abschnitt (20) sowie einen bezogen auf die Richtung der Luftströmung durch das Luftführungselement (10) stromabwärts des ersten Abschnitts (20) angeordneten zweiten Abschnitt (24) aufweist, wobei der zweite Abschnitt (24) dazu eingerichtet ist, die Luft beim Durchströmen des zweiten Abschnitts (24) in einem Winkel von etwa 45 bis 135° relativ zur Richtung der Luftströmug durch den ersten Abschnitt (20) umzulenken,
**gekennzeichnet, durch**
- einen Diffusor (26), der bezogen auf die Richtung der Luftströmung **durch** das Lufiführungselement (10) stromabwärts des zweiten Abschnitts (24) des Strömungslenkungselements (18) angeordnet und mit einer Luftauslassöffnung (28) verbunden ist.

2. Luftführungselement nach Anspruch 1,
**dadurch gekennzeichnet, dass** die Luftableitungsöffnung (16) des Verteilerrohrs (12) schlitzförmig ausgebildet ist und sich parallel zu einer Längsachse (L_{V}) des Verteilerrohrs (12) über mindestens 80% der Länge des Verteilerrohrs (12) erstreckt.

3. Luftführungselement nach Anspruch 1 oder 2,
**dadurch gekennzeichnet, dass** der zweite Abschnitt (24) des Strömungslenkungselements (18) dazu eingerichtet ist, die Luft beim Durchströmen des zweiten Abschnitts (24) in einem Winkel von etwa 90° relativ zur Richtung der Luftströmung durch den ersten Abschnitt (20) umzulenken.

4. Luftführungselement nach einem der Ansprüche 1 bis 3,
**dadurch gekennzeichnet, dass** das Strömungslenkungselement (18) durch zwei miteinander verbindbare Schalen gebildet wird, die einen von Luft durchströmbaren Innenraum des Strömungslenkungselements (18) begrenzen und/oder dass der Diffusor (26) durch zwei miteinander verbindbare Schalen gebildet wird, die einen von Luft durchströmbaren Innenraum des Diffusors (26) begrenzen.

5. Luftführungselement nach einem der Ansprüche 1 bis 4,
**dadurch gekennzeichnet, dass** in dem Strömungslenkungselement (18) eine Mehrzahl von Stegen (36) angeordnet ist, die sich parallel zur Strömungsrichtung der Luft durch das Strömungslenkungselement (18) erstrecken.

6. Luftführungselement nach einem der Ansprüche 1 bis 5,
**dadurch gekennzeichnet, dass** der Diffusor (26) eine im Wesentlichen parallel zu einer Längsachse (L_{D}) des Diffusors (26) angeordnete erste Seitenwand (42) sowie eine in einem Winkel zu der Längsachse (L_{D}) des Diffusors (26) in Richtung der Strömung der Luft durch den ersten Abschnitt (20) des Strömungslenkungselements (18) geneigte zweite Seitenwand (44) aufweist.

7. Luftführungselement nach einem der Ansprüche 1 bis 6,
**dadurch gekennzeichnet, dass** mindestens eine Seitenwand (38) des Strömungslenkungselements (18) und/oder mindestens eine Seitenwand (42, 44) des Diffusors (26) zumindest abschnittsweise aus einem schallabsorbierenden Schaummaterial (46, 48) besteht/bestehen.

8. Luftführungselement nach Anspruch 7,
**dadurch gekennzeichnet, dass** eine einen Außenradius des Strömungslenkungselements (18) bildende Seitenwand (38) des Strömungslenkungselements (18) zumindest abschnittsweise aus einem schallabsorbierenden Schaummaterial (46) besteht und/oder dass die erste und die zweite Seitenwand (42, 44) des Diffusors (26) zumindest abschnittsweise aus einem schallabsorbierenden Schaummaterial (48) bestehen.

9. Luftführungselement nach Anspruch 7 oder 8,
**dadurch gekennzeichnet, dass** eine dem Innenraum des Strömungslenkungselements (18) zugewandte Oberfläche eines aus einem schallabsorbierenden Schaummaterial (46) bestehenden Seitenwandabschnitts des Strömungslenkungselements (18) und/oder eine dem Innenraum des Diffusors (26) zugewandte Oberfläche eines aus einem schallabsorbierenden Schaummaterial (48) bestehenden Seitenwandabschnitts des Diffusors (26) mit einer perforierten Abdeckung versehen ist.

10. Luftführungselement nach einem der Ansprüche 1 bis 9,
**gekennzeichnet durch** einen bezogen auf die Richtung der Luftströmung **durch** das Luftführungselement (10) stromabwärts des Diffusors (26) ausgebildeten Luftauslasskanal (30), in dem eine Lochblende (50) angeordnet ist, wobei in einer Grundplatte (52) der Lochblende (50) ausgebildete Löcher im Bereich einer dem Diffusor (26) zugewandten Oberfläche der Grundplatte (52) an ihren Rändern mit einem Einlaufradius versehen sind und/oder wobei sich von einer von dem Diffusor (26) abgewandten Oberfläche der Grundplatte (52) der Lochblende (50) eine Mehrzahl von Luftführungshülsen (54) erstreckt.

11. Luftführungselement nach Anspruch 10,
**dadurch gekennzeichnet, dass** in dem Luftauslasskanal (30) eine Mehrzahl von Leitblechen (56) angeordnet ist, die sich in Richtung der Luftauslassöffnung (28) erstrecken.

12. Flugzeugklimaanlage,
**gekennzeichnet durch** mindestens ein Luftführungselement (10) nach einem der Ansprüche 1 bis 11.

## Claims

1. Air guiding element (10) for an aircraft air-conditioning system, comprising:
- a distributing pipe (12) having an air inlet opening (14) arranged in the region of an end face of the distributing pipe (12) and an air discharge opening (16) arranged in the region of a generated surface of the distributing pipe (12),
- a flow diverting element (18) having a first section (20) connected to the air discharge opening (16) of the distributing pipe (12) and a second section (24) arranged downstream of the first section (20) relative to the direction of the air flow through the air guiding element (10), the second section (24) being configured to deflect the air as it flows through the second section (24) at an angle of approximately 45 to 135° relative to the direction of the air flow through the first section (20), **characterized by**
- a diffuser (26) which is arranged downstream of the second section (24) of the flow diverting element (18) relative to the direction of the air flow through the air guiding element (10) and is connected to an air outlet opening (28).

2. Air guiding element according to Claim 1,
**characterised in that** the air discharge opening (16) of the distributing pipe (12) is of slit-shaped form and extends parallel to a longitudinal axis (L_{V}) of the distributing pipe (12) over at least 80% of the length of the distributing pipe (12).

3. Air guiding element according to Claim 1 or 2,
**characterised in that** the second portion (24) of the flow diverting element (18) is configured to divert the air as it flows through the second section (24) at an angle of approximately 90° relative to the direction of the air flow through the first section (20).

4. Air guiding element according to one of Claims 1 to 3,
**characterised in that** the flow diverting element (18) is formed by two shells which are connectable to one another and delimit an interior space of the flow diverting element (18) through which air can flow and/or **in that** the diffuser (26) is formed by two shells which are connectable to one another and delimit an interior space of the diffuser (26) through which air can flow.

5. Air guiding element according to one of Claims 1 to 4,
**characterised in that** there are arranged in the flow diverting element (18) a plurality of webs (36) which extend parallel to the flow direction of the air through the flow diverting element (18).

6. Air guiding element according to one of Claims 1 to 5,
**characterised in that** the diffuser (26) has a first side wall (42) arranged substantially parallel to a longitudinal axis (L_{D}) of the diffuser (26) and a second side wall (44) inclined at an angle to the longitudinal axis (L_{D}) of the diffuser (26) in the direction of the flow of the air through the first section (20) of the flow diverting element (18).

7. Air guiding element according to one of Claims 1 to 6,
**characterised in that** at least one side wall (38) of the flow diverting element (18) and/or at least one side wall (42, 44) of the diffuser (26) is/are composed at least in sections of a sound-absorbing foam material (46, 48).

8. Air guiding element according to Claim 7,
**characterised in that** a side wall (38) of the flow diverting element (18) forming an outer radius of the flow diverting element (18) is composed at least in sections of a sound-absorbing foam material (46) and/or **in that** the first and the second side wall (42, 44) of the diffuser (26) are composed at least in sections of a sound-absorbing foam material (48).

9. Air guiding element according to Claim 7 or 8,
**characterised in that** a surface, facing the interior space of the flow diverting element (18), of a side wall section of the flow diverting element (18) composed of a sound-absorbing foam material (46) and/or a surface, facing the interior space of the diffuser (26), of a side wall section of the diffuser (26) composed of a sound-absorbing foam material (48) is provided with a perforated cover.

10. Air guiding element according to one of Claims 1 to 9,
**characterised by** an air outlet channel (30) which is formed downstream of the diffuser (26) relative to the direction of the air flow through the air guiding element (10) and in which an apertured screen (50) is arranged, holes formed in a base plate (52) of the apertured screen (50) being provided in the region of a surface of the base plate (52) facing the diffuser (26) with an entry radius at their edges, and/or a plurality of air guiding sleeves (54) extending from a surface of the base plate (52) of the apertured screen (50) facing away from the diffuser (26).

11. Air guiding element according to Claim 10,
**characterised in that** there are arranged in the air outlet channel (30) a plurality of guide plates (56) which extend in the direction of the air outlet opening (28).

12. Aircraft air-conditioning system,
**characterised by** at least one air guiding element (10) according to one of Claims 1 to 11.

## Revendications

1. Elément de guidage d'air (10) pour un système de climatisation d'avion, comprenant :
- un tube distributeur (12) qui présente un orifice d'entrée d'air (14) disposé dans la zone d'une face frontale dudit tube distributeur (12) ainsi qu'un orifice de déviation d'air (16) disposé dans la zone de la surface périphérique du tube distributeur (12),
- un élément de déflexion de flux (18) qui présente un premier segment (20) relié audit orifice de déviation d'air (16) du tube distributeur (12) ainsi qu'un second segment (24) disposé en aval dudit premier segment (20) par rapport à la direction du flux d'air traversant l'élément de guidage d'air (10), ledit second segment (24) étant conçu pour dévier l'air traversant le second segment (24) selon un angle d'environ 45 à 135°par rapport à la direction du flux d'air traversant le premier segment (20), **caractérisé par**
- un diffuseur (26) qui est disposé en aval du second segment (24) dudit élément de déflexion de flux (18) par rapport à la direction du flux d'air traversant l'élément de guidage d'air (10) et relié à un orifice de sortie d'air (28).

2. Elément de guidage d'air selon la revendication 1,
**caractérisé en ce que** ledit orifice de déviation d'air (16) du tube distributeur (12) est réalisé sous forme de fente et s'étend parallèlement à un axe longitudinal (L_{V}) du tube distributeur (12) sur au moins 80% de la longueur du tube distributeur (12).

3. Elément de guidage d'air selon la revendication 1 ou 2,
**caractérisé en ce que** le second segment (24) de l'élément de déflexion de flux (18) est conçu pour dévier l'air traversant le second segment (24) selon un angle d'environ 90° par rapport à la direction du flux d'air traversant le premier segment (20).

4. Elément de guidage d'air selon l'une des revendications 1 à 3,
**caractérisé en ce que** l'élément de déflexion de flux (18) est constitué par deux coques reliables l'une à l'autre, lesquelles délimitent un espace intérieur de l'élément de déflexion de flux (18) qui peut être traversé par l'air, et/ou **en ce que** le diffuseur (26) est constitué par deux coques reliables l'une à l'autre, lesquelles délimitent un espace intérieur du diffuseur (26) qui peut être traversé par l'air.

5. Elément de guidage d'air selon l'une des revendications 1 à 4,
**caractérisé en ce qu'**est disposée dans l'élément de déflexion de flux (18) une pluralité de barrettes (36) qui s'étendent parallèlement à la direction du flux de l'air traversant l'élément de déflexion de flux (18).

6. Elément de guidage d'air selon l'une des revendications 1 à 5,
**caractérisé en ce que** le diffuseur (26) présente une première paroi latérale (42) disposée pour l'essentiel parallèlement à un axe longitudinal (L_{D}) du diffuseur (26) ainsi qu'une seconde paroi latérale (44) inclinée selon un angle par rapport audit axe longitudinal (L_{D}) du diffuseur (26), dans la direction du flux d'air traversant le premier segment (20) de l'élément de déflexion de flux (18).

7. Elément de guidage d'air selon l'une des revendications 1 à 6,
**caractérisé en ce qu'**au moins une paroi latérale (38) de l'élément de déflexion de flux (18) et/ou au moins une paroi latérale (42, 44) du diffuseur (26) se compose(nt) au moins par endroits d'un matériau insonorisant en mousse (46, 48).

8. Elément de guidage d'air selon la revendication 7,
**caractérisé en ce qu'**une paroi latérale (38) de l'élément de déflexion de flux (18) formant un rayon extérieur de l'élément de déflexion de flux (18) se compose au moins par endroits d'un matériau insonorisant en mousse (46) et/ou **en ce que** la première et la seconde paroi latérale (42, 44) du diffuseur (26) se composent au moins par endroits d'un matériau insonorisant en mousse (48).

9. Elément de guidage d'air selon la revendication 7 ou 8,
**caractérisé en ce qu'**une surface d'un segment de paroi latérale composé d'un matériau insonorisant en mousse (46) de l'élément de déflexion de flux (18), laquelle surface est tournée vers l'espace intérieur de l'élément de déflexion de flux (18), et/ou une surface d'un segment de paroi latérale composé d'un matériau insonorisant en mousse (46) du diffuseur (26), laquelle surface est tournée vers l'espace intérieur du diffuseur (26), sont pourvues d'un cache perforé.

10. Elément de guidage d'air selon l'une des revendications 1 à 9,
**caractérisé par** un conduit de sortie d'air (30), lequel est réalisé en aval du diffuseur (26) par rapport à la direction du flux d'air traversant l'élément de guidage d'air (10) et dans lequel est disposé un panneau perforé (50), les trous formés dans une plaque (52) dudit panneau perforé (50) étant, dans la zone d'une surface de ladite plaque (52) tournée vers le diffuseur (26), pourvus sur leurs bords d'un rayon d'entrée, et/ou une pluralité de manchons de guidage d'air (54) s'étendant depuis une surface de la plaque (52) du panneau perforé (50) opposée au diffuseur (26).

11. Elément de guidage d'air selon la revendication 10,
**caractérisé en ce qu'**une pluralité de tôles de guidage (56), qui s'étendent dans la direction de l'orifice de sortie d'air (28), sont disposées dans ledit conduit de sortie d'air (30).

12. Système de climatisation d'avion,
**caractérisé par** au moins un élément de guidage d'air (10) selon l'une des revendications 1 à 11.
